# EUROPÄISCHE PATENTANMELDUNG

(11) **EP 4 079 825 A1**
(43) Veröffentlichungstag der Anmeldung: **26.10.2022**
(21) Anmeldenummer: 21169997.0
(22) Anmeldetag: 22.04.2021
(51) Int. Cl.: C10G 2/00, C01B 3/00

(54) **ANLAGE UND VERFAHREN ZUR HERSTELLUNG VON SYNTHETISCHEN KRAFTSTOFFEN OHNE KOHLENDIOXIDEMISSION**

(71) Anmelder: EDL Anlagenbau Gesellschaft mbH, 04158 Leipzig (DE); Haid, Michael, 40885 Ratingen (DE)
(72) Erfinder: HAID, Michael, 40885 Ratingen (DE); GAMBERT, Rolf, 04668 Grimma (DE); SCHWARTZE, Jan, 04299 Leipzig (DE)
(74) Vertreter: Henkel & Partner mbB

(57) **Zusammenfassung**

Eine Anlage zur Herstellung von synthetischen Kraftstoffen, insbesondere von Flugturbinenkraftstoff (Kerosin), Rohbenzin und/oder Diesel, umfasst:
a) eine Synthesegasherstellungseinrichtung zur Herstellung eines Rohsynthesegases aus Methan, Wasser und Kohlendioxid, wobei die Synthesegasherstellungseinrichtung mindestens einen Reaktionsabschnitt, in dem Methan, Wasser und Kohlendioxid zu dem Rohsynthesegas reagieren, sowie mindestens einen Wärmeerzeugungsabschnitt aufweist, in dem durch Verbrennen von Brennstoff zu Rauchgas die zur Reaktion von Methan und Kohlendioxid zu dem Rohsynthesegas notwendige Wärme erzeugt wird,
b) eine Trenneinrichtung zur Abtrennung von Kohlendioxid aus dem in der Synthesegasherstellungseinrichtung hergestellten Rohsynthesegas,
c) eine Fischer-Tropsch-Einrichtung zur Herstellung von Kohlenwasserstoffen durch ein Fischer-Tropsch-Verfahren aus dem Synthesegas, aus dem in der Trenneinrichtung Kohlendioxid abgetrennt wurde, und
d) eine Raffinationseinrichtung zur Raffination der in der Fischer-Tropsch-Einrichtung hergestellten Kohlenwasserstoffe zu den synthetischen Kraftstoffen,
wobei die Anlage ferner umfasst e₁) eine Trenneinrichtung zur Abtrennung von Kohlendioxid aus dem über die Abfuhrleitung für Rauchgas aus der Synthesegasherstellungseinrichtung abgeführten Rauchgas und/oder e₂) eine Rauchgasrückführleitung, welche mit dem Wärmeerzeugungsabschnitt der Synthesegasherstellungseinrichtung verbunden ist, wobei i) das aus dem Rauchgas abgetrennte Kohlendioxid bzw. das Rauchgas über die Rauchgasrückführleitung sowie ii) das dem Rohsynthesegas abgetrennte Kohlendioxid entweder der Synthesegasherstellungseinrichtung direkt zugeführt werden oder erst einer Kohlendioxidverdichtungseinrichtung zugeführt und von dort der Synthesegasherstellungseinrichtung zugeführt werden.

## Beschreibung

Die vorliegende Erfindung betrifft eine Anlage sowie ein Verfahren zur Herstellung von synthetischen Kraftstoffen, insbesondere von Flugturbinenkraftstoff, Diesel und/oder Rohbenzin.

Es gibt eine Reihe verschiedener Verfahren zur Herstellung von Kraftstoffen, wie Flugturbinenkraftstoff, Diesel, Rohbenzin oder dergleichen. Solche Verfahren basieren überwiegend auf der Aufbereitung von fossilen Rohstoffen, wie beispielsweise auf der Raffination von Erdöl, auf der Verflüssigung von Kohle oder auf der Synthese von Kraftstoffen aus Erdgas, Wasser und Sauerstoff. Die Synthese von Kraftstoffen aus Erdgas, Wasser und Sauerstoff wird auch als "gas-to-liquids"-Verfahren bezeichnet. Bei diesen Verfahren wird aus Erdgas, Wasser und Sauerstoff zunächst ein Wasserstoff und Kohlenmonoxid umfassendes Synthesegas hergestellt, welches dann in einer Fischer-Tropsch-Synthese zu Kohlenwasserstoffen umgewandelt wird, die vornehmlich aus langkettigen Normalparaffinen bestehen. Diese Kohlenwasserstoffe werden dann durch Cracken und Isomerisierung zu synthetischen Kraftstoffen umgesetzt.

Ein dazu ähnliches Verfahren ist die als "power-to-liquids" bezeichnete Umwandlung von elektrischer Energie zu synthetischen Kraftstoffen. Hierzu werden Wasser und Kohlendioxid zu Synthesegas umgesetzt, welches dann ähnlich wie in den "gas-to-liquids"-Verfahren zu synthetischen Kraftstoffen weiterverarbeitet wird.

Ein dazu alternatives, als "power- and biomass-to-liquids" bezeichnetes Verfahren nutzt Biomasse, wie Biomethan und Biogas, oder synthetisches Methan als Kohlenstoffquelle zusätzlich zu Kohlendioxid aus der Luft bzw. aus Punktquellen und ersetzt damit vollständig fossile Kohlenstoffquellen, wie Erdöl oder Erdgas. Beispielsweise werden in einem derartigen Verfahren Methan, Wasser(dampf) und Kohlendioxid zu Synthesegas umgesetzt, welches dann ähnlich wie in den zuvor genannten Verfahren zu synthetischen Kraftstoffen weiterverarbeitet wird.

Ein wesentlicher Nachteil der vorgenannten Verfahren ist, dass erhebliche Mengen Kohlendioxid erzeugt und emittiert werden. Dies ist jedoch aus umweltpolitischen Gründen und insbesondere aus Klimaschutzgründen unerwünscht. Zudem werden bei diesen Verfahren größere Mengen an Frischwasser benötigt und große Mengen von Abwasser erzeugt. Wasser ist jedoch in der geforderten Reinheit ein teurer Rohstoff und größere Abwassermengen sind aus umweltpolitischen Gründen problematisch.

Ausgehend davon lag der vorliegenden Erfindung die Aufgabe zugrunde, eine Anlage und ein Verfahren zur Herstellung von synthetischen Kraftstoffen bereitzustellen, welche(s) ohne Kohlendioxidemissionen oder, wenn überhaupt, mit minimalen Kohlendioxidemissionen betrieben werden kann, welches nur eine geringe Menge an Frischwasserzufuhr benötigt sowie mit geringfügigen Mengen an anfallendem Abwasser betrieben werden kann, und, welches dennoch zumindest nahezu ausschließlich mit elektrischer Energie und Biomasse betrieben werden kann.

Erfindungsgemäß wird diese Aufgabe gelöst durch eine Anlage gemäß dem Patentanspruch 1 und insbesondere durch eine Anlage zur Herstellung von synthetischen Kraftstoffen, insbesondere von Flugturbinenkraftstoff, Diesel und/oder Rohbenzin, welche umfasst:
a) eine Synthesegasherstellungseinrichtung zur Herstellung eines Kohlenmonoxid, Wasserstoff und Kohlendioxid umfassenden Rohsynthesegases aus Methan, Wasser und Kohlendioxid, wobei die Synthesegasherstellungseinrichtung mindestens einen Reaktionsabschnitt, in dem Methan, Wasser und Kohlendioxid zu dem Rohsynthesegas reagieren, sowie mindestens einen Wärmeerzeugungsabschnitt aufweist, in dem durch Verbrennen von Brennstoff zu Rauchgas die zur Reaktion von Methan und Kohlendioxid zu dem Rohsynthesegas notwendige Wärme erzeugt wird, wobei der Reaktionsabschnitt eine Zufuhrleitung für Methan, eine Zufuhrleitung für Wasser, wenigstens eine Zufuhrleitung für Kohlendioxid sowie eine Abfuhrleitung für Rohsynthesegas umfasst und der Wärmeerzeugungsabschnitt eine Zufuhrleitung für Brennstoff, eine Zufuhrleitung für Sauerstoff enthaltendes Gas sowie eine Abfuhrleitung für Rauchgas umfasst,
b) eine Trenneinrichtung zur Abtrennung von Kohlendioxid aus dem in der Synthesegasherstellungseinrichtung hergestellten Rohsynthesegas mit einer Abfuhrleitung für Kohlendioxid und einer Abfuhrleitung für Synthesegas,
c) eine Fischer-Tropsch-Einrichtung zur Herstellung von Kohlenwasserstoffen durch ein Fischer-Tropsch-Verfahren aus dem Synthesegas, aus dem in der Trenneinrichtung Kohlendioxid abgetrennt wurde, und
d) eine Raffinationseinrichtung zur Raffination der in der Fischer-Tropsch-Einrichtung hergestellten Kohlenwasserstoffe zu den synthetischen Kraftstoffen,
wobei die Anlage ferner umfasst:
e₁) eine Trenneinrichtung zur Abtrennung von Kohlendioxid aus dem über die Abfuhrleitung für Rauchgas aus der Synthesegasherstellungseinrichtung abgeführten Rauchgas, wobei die Trenneinrichtung eine Abfuhrleitung für Kohlendioxid aufweist, wobei die Abfuhrleitung für Kohlendioxid der Trenneinrichtung zur Abtrennung von Kohlendioxid aus dem über die Abfuhrleitung für Rauchgas aus der Synthesegasherstellungseinrichtung abgeführten Rauchgas sowie die Abfuhrleitung für Kohlendioxid der Trenneinrichtung zur Abtrennung von Kohlendioxid aus dem in der Synthesegasherstellungseinrichtung hergestellten Rohsynthesegas entweder direkt mit einer der wenigstens einen Zufuhrleitung für Kohlendioxid der Synthesegasherstellungseinrichtung verbunden sind oder die Abfuhrleitung für Kohlendioxid der Trenneinrichtung zur Abtrennung von Kohlendioxid aus dem über die Abfuhrleitung für Rauchgas aus der Synthesegasherstellungseinrichtung abgeführten Rauchgas sowie die Abfuhrleitung für Kohlendioxid der Trenneinrichtung zur Abtrennung von Kohlendioxid aus dem in der Synthesegasherstellungseinrichtung hergestellten Rohsynthesegas mit einer Kohlendioxidverdichtungseinrichtung verbunden sind, die eine Abfuhrleitung aufweist, die mit einer der wenigstens einen Zufuhrleitung für Kohlendioxid der Synthesegasherstellungseinrichtung verbunden ist,
   und/oder
e₂) eine mit der Abfuhrleitung für Rauchgas der Synthesegasherstellungseinrichtung verbundene Rauchgasrückführleitung, wobei die Rauchgasrückführleitung sowie die Abfuhrleitung für Kohlendioxid der Trenneinrichtung zur Abtrennung von Kohlendioxid aus dem in der Synthesegasherstellungseinrichtung hergestellten Rohsynthesegas entweder direkt mit einer der wenigstens einen Zufuhrleitung für Kohlendioxid der Synthesegasherstellungseinrichtung verbunden sind oder die Rauchgasrückführleitung sowie die Abfuhrleitung für Kohlendioxid der Trenneinrichtung zur Abtrennung von Kohlendioxid aus dem in der Synthesegasherstellungseinrichtung hergestellten Rohsynthesegas mit einer Kohlendioxidverdichtungseinrichtung verbunden sind, die eine Abfuhrleitung aufweist, die mit einer der wenigstens einen Zufuhrleitung für Kohlendioxid der Synthesegasherstellungseinrichtung verbunden ist.

Indem in der erfindungsgemäßen Anlage und bei dem erfindungsgemäßen Verfahren nicht nur das in dem Reaktionsprodukt der Synthesegasherstellungseinrichtung, d.h. in dem Rohsynthesegas, verbleibende Kohlendioxid abgetrennt und in die Synthesegasherstellungseinrichtung zurückgeführt wird, sondern auch das in der Synthesegasherstellungseinrichtung - zum Bereitstellen der für die stark endotherme Reaktion notwendigen Wärme durch Verbrennen - erzeugte Rauchgas entweder vollständig in die Synthesegasherstellungseinrichtung zurückgeführt wird und/oder das darin enthaltende Kohlendioxid aus dem Rauchgas abgetrennt und dann das abgetrennte Kohlendioxid in die Synthesegasherstellungseinrichtung zurückgeführt wird, wird das gesamte Kohlendioxid in dem Prozess verwertet und wird eine Kohlendioxidemission zuverlässig vermieden. Abgesehen davon erlauben es die erfindungsgemäße Anlage und das erfindungsgemäße Verfahren, die Menge an ungenutzten Abgasen signifikant zu verringern, da die anfallenden Prozessgase in den einzelnen Anlagenteilen wiederverwendet werden können und werden. Als Methan wird insbesondere Biomethan oder aus grünen Einsatzstoffen hergestelltes synthetisches Methan eingesetzt und als elektrische Energie insbesondere Ökostrom. Mithin ist das erfindungsgemäße Verfahren ressourcenschonend, da natürliche und fossile Rohstoffe, wie Erdöl, Erdgas und dergleichen, nicht benötigt werden. Ferner können die erfindungsgemäße Anlage und das erfindungsgemäße Verfahren mit sehr geringer Menge an Frischwasser betrieben werden. Insgesamt ermöglicht die vorliegende Erfindung die komplette Umwandlung von Methan, von im Verfahren anfallendem Kohlendioxid und von Wasser mittels elektrischer Energie zu synthetischen Kraftstoffe über vollintegrierte Verfahrenseinheiten unter Vermeidung jeglicher Kohlendioxidemission, ohne nennenswerten kontinuierlichen Abgasmengen und allenfalls einem minimierten Abwasserstrom zu synthetischen Kraftstoffen, wie Flugturbinenkraftstoff, Diesel und/oder Rohbenzin, zum Beispiel Kerosin (SAF-*"Sustainable Aviation Fuel'*)*,* Rohbenzin und/oder Leichtbenzin.

Erfindungsgemäß ist die Trenneinrichtung b) zur Abtrennung von Kohlendioxid aus dem in der Synthesegasherstellungseinrichtung hergestellten Rohsynthesegas ausgestaltet, ist die Fischer-Tropsch-Einrichtung c) zur Herstellung von Kohlenwasserstoffen durch ein Fischer-Tropsch-Verfahren aus dem Synthesegas, aus dem in der Trenneinrichtung b) Kohlendioxid abgetrennt wurde, ausgestaltet, und ist die Raffinationseinrichtung d) zur Raffination der in der Fischer-Tropsch-Einrichtung c) hergestellten Kohlenwasserstoffe zu den synthetischen Kraftstoffen ausgestaltet. Das heißt, die Trenneinrichtung b) zur Abtrennung von Kohlendioxid ist mit der Synthesegasherstellungseinrichtung a) über die Abfuhrleitung für Rohsynthesegas der Synthesegasherstellungseinrichtung a) verbunden, die Fischer-Tropsch-Einrichtung c) zur Herstellung von Kohlenwasserstoffen durch ein Fischer-Tropsch-Verfahren ist mit der Trenneinrichtung b) über eine Zufuhrleitung für Synthesegas verbunden und die Raffinationseinrichtung d) ist mit der Fischer-Tropsch-Einrichtung d) über eine Zufuhrleitung für Kohlenwasserstoffe verbunden.

Wie vorstehend dargelegt, ist es Kern der vorliegenden Erfindung, sämtliches Kohlendioxid, welches während des Betriebes der erfindungsgemäßen Anlage bzw. während der Durchführung des erfindungsgemäßen Verfahrens anfällt, d.h. nicht nur das in dem Reaktionsprodukt der Synthesegasherstellungseinrichtung, d.h. in dem Rohsynthesegas, verbleibende Kohlendioxid abzutrennen und in die Synthesegasherstellungseinrichtung zurückzuführen, sondern insbesondere und vor allem auch das in der Synthesegasherstellungseinrichtung - zum Bereitstellen der für die stark endotherme Reaktion notwendigen Wärme durch Verbrennen - erzeugte Rauchgas entweder vollständig in die Synthesegasherstellungseinrichtung zurückzuführen und/oder das darin enthaltende Kohlendioxid aus dem Rauchgas abzutrennen und dann das abgetrennte Kohlendioxid in die Synthesegasherstellungseinrichtung zurückzuführen. Daher ist es gemäß der vorliegenden Erfindung ganz besonders bevorzugt, dass die Anlage keine Kohlendioxidabfuhrleitung aufweist bzw. beim Betrieb der Anlage kein Kohlendioxid abgeführt wird. Das erfindungsgemäße Verfahren weist mithin ganz besonders bevorzugt eine komplett neutrale Kohlendioxid-Bilanz auf.

Ein wesentlicher Bestandteil der erfindungsgemäßen Anlage ist die Synthesegasherstellungseinrichtung b) zur Herstellung eines Kohlenmonoxids, Wasserstoff und Kohlendioxid umfassenden Rohsynthesegases aus Methan, Wasser und Kohlendioxid, welche nachfolgend auch als Trockenreformer bezeichnet wird. Der Trockenreformer kann neben Methan und Wasserdampf auch Kohlendioxid verarbeiten, wobei diese Reaktionen sehr stark endotherm sind. Daher benötigt der Trockenreformer eine entsprechende Beheizung, um die für die endotherme Reaktion notwendige Energie bzw. Wärme bereitzustellen, was erfindungsgemäß durch die Verbrennung von Brennstoff mit einem sauerstoffhaltigen Gas, wie mit Luft, mit reinem Sauerstoff oder mit Sauerstoff angereicherter Luft, erreicht wird. Gemäß einer besonders bevorzugten Ausführungsform der vorliegenden Erfindung ist es vorgesehen, den hierzu benötigten Brennstoff vollständig oder zumindest nahezu vollständig durch während des Betriebs der Anlage erzeugte Abgase bzw. Brenngase und erzeugten synthetischen Kraftstoff bereitzustellen, d.h. ohne oder zumindest nahezu ohne externen Brennstoff auszukommen.

Hierzu wird es in Weiterbildung des Erfindungsgedankens vorgeschlagen, dass die Fischer-Tropsch-Einrichtung oder die Raffinationseinrichtung sowie besonders bevorzugt die Fischer-Tropsch-Einrichtung und die Raffinationseinrichtung jeweils eine Gasabfuhrleitung aufweisen, welche mit der Zufuhrleitung für Brennstoff der Synthesegasherstellungseinrichtung verbunden ist/sind, um so die bei der Fischer-Tropsch-Reaktion und bei der Raffination entstehende Abgase, die einen Brennwert aufweisen, als Brennstoff bzw. Brenngas zur Beheizung der Synthesegasherstellungseinrichtung zu verwenden.

Zudem ist es bevorzugt, dass die Raffinationseinrichtung ein oder mehrere Produktabfuhrleitungen für synthetische Kraftstoffe aufweist, wobei wenigstens eine der ein oder mehreren Produktabfuhrleitungen für synthetische Kraftstoffe über eine Rückführleitung mit der Zufuhrleitung für Brennstoff der Synthesegasherstellungseinrichtung verbunden ist, so dass ein Teil des in der Raffinationseinrichtung erzeugten synthetischen Kraftstoffs, wie insbesondere Leichtbenzin, als Brennstoff in den Wärmeerzeugungsabschnitt der Synthesegasherstellungseinrichtung geleitet werden kann. Somit kann, wenn die in der Fischer-Tropsch-Einrichtung und in der Raffinationseinrichtung erzeugten Abgase in der Summe nicht genügend Brennwert aufweisen, um bei deren Verbrennung die für den Betrieb der Synthesegasherstellungseinrichtung benötige Wärme zu erzeugen, die benötigte Restmenge an Energie bzw. Wärme durch Zuleiten einer entsprechenden Menge von in der Anlage produziertem synthetischem Kraftstoff, wie insbesondere Leichtbenzin, erzeugt werden, um so auf die Zuführung externen Brennstoffs verzichten zu können.

Beispielsweise kann die Raffinationseinrichtung eine Produktabfuhrleitung für Kerosin (SAF), eine Produktabfuhrleitung für Rohbenzin und eine Produktabfuhrleitung für Leichtbenzin aufweisen, wobei die Rückführleitung von einer oder mehreren dieser Produktabfuhrleitungen und bevorzugt der Produktabfuhrleitung für Leichtbenzin in die Zufuhrleitung für Brennstoff der Synthesegasherstellungseinrichtung führt.

Gemäß einer weiteren bevorzugten Ausführungsform der vorliegenden Erfindung ist es vorgesehen, dass die Anlage eine Steuereinrichtung umfasst, welche die Menge von in den Wärmeerzeugungsabschnitt der Synthesegasherstellungseinrichtung als Brennstoff geleiteten synthetischen Kraftstoff so steuert, dass der Synthesegasherstellungseinrichtung und bevorzugt der gesamten Anlage kein externer Brennstoff zugeführt werden muss.

In Weiterbildung des Erfindungsgedankens wird es vorgeschlagen, dass die Synthesegasherstellungseinrichtung bzw. der Trockenreformer einen oder mehrere Rohrbündelreaktoren umfasst, wobei die Rohre jedes Rohrbündelreaktors den Reaktionsabschnitt ausbilden und der Bereich außerhalb der Rohre den Wärmeerzeugungsabschnitt ausbildet. Dadurch kann auf konstruktiv einfache Weise eine schnelle, gleichmäßige und effektive Erwärmung der Edukte Methan, Wasserdampf und Kohlendioxid auf die zur Erzeugung des Rohsynthesegases notwendige Temperatur erreicht werden. In den Rohren sind ein oder mehrere geeignete Ni-Oxid-Katalysatoren angeordnet, wie beispielsweise SYNSPIRE^{™} G1-110 (BASF-Katalysator). Bei dem Betrieb der Anlage werden die Edukte in den Rohren des Trockenreformer durch die Verbrennung des Brennstoffes in dem Wärmeerzeugungsabschnitt des Trockenreformers vorzugsweise bei 10 bis 50 bar, besonders bevorzugt 20 bis 40 bar, wie beispielsweise etwa 30 bar, auf 700 bis 1.200°C, besonders bevorzugt 800 bis 1.100°C, weiter bevorzugt 900 bis 950°C, wie beispielsweise etwa 930°C, aufgeheizt. Der Umsatz des Kohlendioxids im Trockenreformer mit Methan und Wasserdampf erreicht auch unter optimalen Bedingungen in der Praxis nur maximal 50%, so dass die Kohlendioxidkonzentration in dem erzeugten Rohsynthesegas etwa 30 Vol.-% beträgt. Diese vergleichsweise hohe Kohlendioxidkonzentration würde die Fischer-Tropsch-Synthese, in der Kohlendioxid ein Inertgas ist, stark belasten und das Kohlendioxid würde als Bestandteil des Abgases nach der Fischer-Tropsch-Synthese mit dem Abgas der Fischer-Tropsch-Einrichtung in Trockenreformer zurückgeführt werden, wo es die Verbrennungseffizienz verringern und in das Rauchgas gelangen würde. Um all die damit verbundenen Nachteile zu vermeiden, wird das Kohlendioxid in der erfindungsgemäßen Anlage in der Trenneinrichtung b) aus dem Rohsynthesegas abgetrennt.

Für den in der Raffinationseinrichtung vorzugsweise enthaltenen Iso-Hydrocracker-Reaktor und für den darin vorzugsweise ebenfalls enthaltenen Wasserstoffstripper wird Wasserstoff benötigt. Hierfür wird es in Weiterbildung des Erfindungsgedankens vorgeschlagen, dass die Anlage ferner eine Wasserstoffproduktionseinrichtung aufweist. Gute Ergebnisse werden insbesondere erzielt, wenn die Wasserstoffproduktionseinrichtung eine Elektrolyseeinrichtung zur Reaktion von Wasser zu Wasserstoff und Sauerstoff umfasst bzw. ist. Vorzugsweise weist die Elektrolyseeinrichtung eine Wasserzufuhrleitung, eine Sauerstoffabfuhrleitung und eine Wasserstoffabfuhrleitung auf, wobei von der Wasserstoffabfuhrleitung eine Leitung zu der Fischer-Tropsch-Einrichtung und/oder von der Wasserstoffabfuhrleitung eine Leitung zu der Raffinationseinrichtung führt.

Vorzugsweise umfasst die Elektrolyseeinrichtung eine oder mehrere Festoxid-Elektrolysezellen, eine oder mehrere Polymerelektrolytmembran-Elektrolysezellen und/oder eine oder mehrere Alkali-Elektrolysezellen. Beispielsweise erfolgt die Wasserstoffproduktion durch eine alkalische Niedertemperatur-Hochdruck-Wasserelektrolyse.

Ferner ist es bevorzugt, dass die Synthesegasherstellungseinrichtung auch eine Wasserstoffzufuhrleitung umfasst, wobei von der Wasserstoffabfuhrleitung der Elektrolyseeinrichtung eine Leitung zu der Wasserstoffzufuhrleitung der Synthesegasherstellungseinrichtung führt. Dadurch kann der Synthesegasherstellungseinrichtung bei dem Betrieb der erfindungsgemäßen Anlage Wasserstoff zugeführt werden und dadurch das H₂/CO-Molverhältnis des in der Synthesegasherstellungseinrichtung erzeugten Rohsynthesegas eingestellt werden. Aus diesem Grund ist es bei dieser Ausführungsform auch bevorzugt, dass die Anlage eine Steuereinrichtung umfasst, welche die Menge von in die Synthesegasherstellungseinrichtung geleiteten Wasserstoff so steuert, dass das H₂/CO-Molverhältnis in dem in der Synthesegasherstellungseinrichtung erzeugten Rohsynthesegas 1,15 bis 1,80 beträgt. Typischerweise arbeitet der Trockenreformer mit einem H₂/CO-Molverhältnis von ungefähr 1,15. Bei größeren H₂/CO-Molverhältnis sinkt jedoch der Kohlendioxidbedarf des Trockenreformers. Um die vorhandene Kohlendioxidmenge aus der Abtrennung des Kohlendioxids aus dem Rauchgas und aus dem Rohsynthesegas gegenüber dem notwendigen Bedarf abzugleichen, ist es erfindungsgemäß bevorzugt, das Molverhältnis (H₂/CO) auf die vorhandene abgetrennte CO₂-Menge einzustellen.

In Weiterbildung des Erfindungsgedankens wird es vorgeschlagen, dass von der Sauerstoffabfuhrleitung der Elektrolyseeinrichtung eine Leitung in die Zufuhrleitung für Sauerstoff enthaltendes Gas der Synthesegasherstellungseinrichtung führt, um so in der Elektrolyseeinrichtung erzeugten Sauerstoff in der Synthesegasherstellungseinrichtung zur Verbrennung des Brennstoffs einzusetzen. Durch eine solche Rückführung des "grünen" Sauerstoffs wird es erreicht, dass nur ca. 20% der Luft auf die notwendige Verbrennungstemperatur aufgeheizt werden müssen und damit wesentlich geringere Heizleistungen bei gleicher Reaktionsenthalpie erbracht werden müssen. Die Verringerung der Heizleistung hat ebenfalls zur Folge, dass auch die Kühlleistung für das Rauchgas wesentlich verringert werden kann.

Gemäß einer besonders bevorzugten Ausführungsform der vorliegenden Erfindung ist es vorgesehen, dass die Anlage eine Wasservollentsalzungseinrichtung umfasst, in der Frischwasser so entsalzt und entgast wird, dass das erzeugte Wasser eine für die Elektrolyse von Wasser ausreichend hohe Reinheit aufweist. Mithin umfasst die Wasservollentsalzungseinrichtung vorzugsweise eine Frischwasserzufuhrleitung und eine Abfuhrleitung für entsalztes Wasser, wobei die Abfuhrleitung für entsalztes Wasser mit der Wasserzufuhrleitung der Elektrolyseeinrichtung verbunden ist. Besonders bevorzugt wird das gesamte Frischwasser der Wasserentsalzungseinrichtung zugeführt. Gute Ergebnisse werden insbesondere erzielt, wenn die Entsalzungseinrichtung so ausgestaltet ist, dass das zugeführte Frischwasser soweit entsalzt und entgast wird, dass dessen Leitfähigkeit weniger als 20 µS/cm, bevorzugt weniger als 10 µS/cm, besonders bevorzugt weniger als 5 µS/cm und höchst bevorzugt maximal 2 µS/cm beträgt. Zu diesem Zweck weist die Vollentsalzungseinrichtung vorzugsweise ein oder mehrere An- und Kationenaustauscher sowie eine Membraneinrichtung zur Entgasung auf. Während der Entgasung wird Kohlendioxid und Sauerstoff aus dem Wasser abgetrennt. Die Regeneration der An- und Kationentauscher erfolgt vorzugsweise mit Hilfe von Natronlauge bzw. Salzsäure. Das entstehende Abwasser hat in etwa die 6-fache Ionenkonzentration des Wassers vor der Zuführung in die Entsalzungseinrichtung und kann auf Grund einer gleichzeitigen Regeneration des An- und Kationentauschers als neutrales Abwasser zu einer kommunalen Abwasseranlage geführt werden.

In Weiterbildung des Erfindungsgedankens wird es vorgeschlagen, dass die Anlage eine Wasserreinigungseinrichtung umfasst, in welcher in der Anlage anfallendes Prozesswasser so gereinigt wird, dass es im Kreislauf geführt werden kann. Dadurch wird der Frischwasserbedarf der Anlage auf ein Minimum verringert. Vorzugsweise weist die Anlage in dieser Ausführungsform eine von der Raffinationseinrichtung zu der Wasserreinigungseinrichtung führende Wasserzufuhrleitung und/oder eine von der Fischer-Tropsch-Einrichtung zu der Wasserreinigungseinrichtung führende Wasserzufuhrleitung und/oder eine von der Synthesegasherstellungseinrichtung zu der Wasserreinigungseinrichtung führende Wasserzufuhrleitung jeweils zur Reinigung von darin anfallendem Prozesswasser auf. Die Wasserreinigungseinrichtung weist vorzugsweise eine oder mehrere Dampfstrippereinheiten auf, in der durch Dampfstrippung wenigstens 95% aller Kohlenwasserstoffe abgetrennt werden können.

Vorzugsweise ist die Wasserreinigungseinrichtung über eine Leitung mit der Wasservollentsalzungseinrichtung verbunden, so dass in der Wasserreinigungseinrichtung gereinigtes Wasser in die Wasservollentsalzungseinrichtung geleitet werden kann. So kann die Menge an entsalztem und entgastem Wasser insbesondere für die Elektrolyseeinrichtung flexibel den Bedürfnissen angepasst werden.

Gemäß einer weiteren, besonders bevorzugten Ausführungsform der vorliegenden Erfindung ist die Wasserreinigungseinrichtung direkt oder indirekt mit der Zufuhrleitung für Wasser der Synthesegasherstellungseinrichtung verbunden, um gereinigtes Prozesswasser als Edukt der Synthesegasherstellungseinrichtung zuführen zu können.

Vorzugsweise ist in dieser Ausführungsform der vorliegenden Erfindung der Wasserreinigungseinrichtung eine Verdampfungseinrichtung nachgeschaltet, wobei die Verdampfungseinrichtung mit der Wasserreinigungseinrichtung über eine Leitung und mit der Zufuhrleitung für Wasser der Synthesegasherstellungseinrichtung zur Zuführung von Wasser in Form von Dampf zu der Synthesegasherstellungseinrichtung verbunden ist.

Zudem ist es bevorzugt, dass die Anlage eine Steuereinrichtung umfasst, welche die Menge von in den Reaktionsabschnitt der Synthesegasherstellungseinrichtung zugeführten, in der Wasserreinigungseinrichtung gereinigten Wasser so steuert, dass der Synthesegasherstellungseinrichtung kein Frischwasser zugeführt werden muss. Dies trägt zur Minimierung des Frischwasserbedarfs bei dem Betrieb der erfindungsgemäßen Anlage bei.

Zur Abtrennung des Kohlendioxids aus dem Rohsynthesegas wird es in Weiterbildung des Erfindungsgedankens vorgeschlagen, dass die entsprechende Trenneinrichtung b) einen Aminwäscher zur Abtrennung von Kohlendioxid durch Absorption aus dem Rohsynthesegas aufweist. In dem Aminwäscher wird Kohlendioxid aus dem Rohsynthesegas durch Absorption mit wenigstens einem Absorptionsmittel, welches bevorzugt aus einer Aminverbindung, wie Monoethanolamin und/oder Diglycolamin und Wasser besteht, abgetrennt und dann direkt oder indirekt (beispielsweise über einen Desorber und einen Verdichter) wieder zu der Synthesegasherstellungseinrichtung zurückgeführt wird.

Gute Ergebnisse werden insbesondere erzielt, wenn der Trenneinrichtung b) eine Verdichtungseinrichtung zur Verdichtung des Synthesegases auf den in der Fischer-Tropsch-Synthese erforderlichen Druck nachgeschaltet ist, wobei die Verdichtungseinrichtung mit der Trenneinrichtung über eine Leitung und mit der Fischer-Tropsch-Einrichtung über eine Synthesegaszufuhrleitung verbunden ist. In dem bevorzugten Verdichter wird das verbliebene Synthesegas auf den in der Fischer-Tropsch-Synthese erforderlichen Druck verdichtet, bevor das so verdichtete Synthesegas der Fischer-Tropsch-Einrichtung zugeführt wird. Das der Fischer-Tropsch-Einrichtung zugeführte Synthesegas enthält vorzugsweise 80 bis 90 Mass.-% Kohlenmonoxid und 10 bis 15 Mass.-% Wasserstoff.

Vorzugsweise wird der Verdichtungseinrichtung Wasserstoff zugeführt, um das H₂/CO-Molverhältnis des der Fischer-Tropsch-Einrichtung zugeführten Synthesegases auf einen optimalen Wert einzustellen. Zu diesem Zweck weist die Verdichtungseinrichtung bevorzugt eine Wasserstoffzufuhrleitung auf, welche mit der Elektrolyseeinrichtung verbunden ist. Beispielsweise wird das Synthesegas in der Verdichtungseinrichtung auf 30 bis 60 bar, bevorzugt 40 bis 50 bar, wie etwa 45 bar verdichtet, sowie auf eine Temperatur von 100 bis 140°C, bevorzugt 110 bis 130°C, wie etwa 120°C, eingestellt. Nach der Verdichtungseinrichtung erfolgt bevorzugt auch eine Reinigung des Synthesegases mittels Adsorbens in einem 3-stufigen Verfahren zur Abreinigung von Halogen-, Sauerstoff- und Schwefelverbindungen im ppb-Bereich, die für die Fischer-Tropsch-Synthese Katalysatorgifte darstellen. Die Reinigung erfolgt in drei nacheinander geschalteten Stufen für die Halogen-, die Sauerstoff- und die Schwefelabtrennung in entsprechenden Festbettreaktoren. Eine Aktivkohleschüttung dient als zusätzlicher Sicherheitsfilter. Das Synthesegas wird mit einem Druck von ca. 45 bar und einer Temperatur von etwa 120°C der Feinreinigung zugeführt. Ein Aluminiumoxid/Natriumoxid-Adsorbens wirkt als Halogenfänger. Das von Halogen befreite Synthesegas wird unter Temperaturregelung auf die Betriebstemperaturen der nachgeschalteten Reaktoren von 140 bis 150°C weiter aufgeheizt. Diese Aufheizung erfolgt durch Beaufschlagung des Synthesegas-Vorwärmers mittels Mitteldruckdampf. Ein Aluminiumoxid/Palladiumoxid-Adsorbens kommt im Sauerstoffaustragsreaktor zur Anwendung und wirkt als Sauerstoffbinder. Das noch mit Spuren von Schwefelverbindungen verunreinigte Synthesegas durchströmt im Schwefelaustragsreaktor unterschiedliche Adsorbensschichten, nämlich zuerst eine Schicht mit einem Zinkoxid/Aluminiumoxid/Natriumoxid-Adsorbens, in dem die Hauptentschwefelung stattfindet, und danach eine weitere Sicherheitsschicht mit Zinkoxid/Kupferoxid-Adsorbens, in dem gegebenenfalls Restschwefel gebunden wird. Eine zusätzliche Aktivkohleschüttung dient als weiterer Filter für weitere Verunreinigungen.

Zur Einstellung des optimalen H₂/CO-Molverhältnis des der Fischer-Tropsch-Einrichtung zugeführten Synthesegases ist es bevorzugt, dass die Anlage eine Steuereinrichtung umfasst, welche die Menge von in die Verdichtungseinrichtung geleiteten Wasserstoff so steuert, dass das H₂/CO-Molverhältnis in dem aus der Verdichtungseinrichtung abgeführten Synthesegas, welches der Fischer-Tropsch-Einrichtung über die Synthesegaszufuhrleitung zugeführt wird, mehr als 2,0 beträgt.

Das Synthesegas wird anschließend in der Fischer-Tropsch-Einrichtung zu Kohlenwasserstoffen umgesetzt. Die Fischer-Tropsch-Synthese wird vorzugsweise in einem Reaktor mit einem Katalysator bei einer Temperatur von 170 bis 270°C, bevorzugt von 190 bis 250°C und höchst bevorzugt 210 bis 230°C, wie etwa 220°C, durchgeführt. Als Katalysatoren eignen sich insbesondere solche ausgewählt aus der Gruppe bestehend aus Kobaltkatalysatoren, wie bevorzugt Co/MMT (Montmorillonite) oder Co/SiO₂. Die Fischer-Tropsch-Synthese wird vorzugsweise in einen oder mehreren Rohrbündelapparaten durchgeführt, wobei sich der Katalysator in den Rohren befindet, wohingegen das Kühlmedium, vorzugsweise Kesselspeisewasser, im Mantelraum geführt wird. Die Fischer-Tropsch-Einrichtung umfasst bevorzugt einen oder zwei Reaktoren, um die Fischer-Tropsch-Synthese einstufig oder zweistufig durchführen zu können. Aus Kostengründen wird die Fischer-Tropsch-Synthese bevorzugt einstufig durchgeführt. Beispielsweise wird die Fischer-Tropsch-Synthese bei einem Druck von 25 bis 35 bar oder vorzugsweise auch bei einem höheren Druck von beispielsweise 45 bar durchgeführt. Je höher der Druck, desto kleiner können die Reaktoren gebaut werden. Vorzugsweise wird die Fischer-Tropsch-Synthese so durchgeführt, dass ein Kohlenmonoxidumsatz von 92% oder mehr erreicht wird. Bei der Fischer-Tropsch-Synthese werden als flüssige Produkte Kondensate und Wachse erhalten, die der nachgeschalteten Raffinationseinrichtung zugeführt werden. Die Kühlung des sehr starken exothermen Prozesses der Fischer-Tropsch-Synthese erfolgt über Kesselspeisewasser, das über eine entsprechende Leitung von der Wasservollentsalzungseinrichtung und/oder der Wasserreinigungseinrichtung und bevorzugt von der Wasservollentsalzungseinrichtung in die Fischer-Tropsch-Einrichtung geführt und zur Kühlung der Reaktoren verdampft wird. Der anfallende Dampf der Fischer-Tropsch-Synthese wird bevorzugt über eine Wasserdampfrückfuhrleitung zumindest zu einem großen Teil der Synthesegasherstellungseinrichtung zugeführt. Die darüberhinausgehende Menge an Dampf aus der Fischer-Tropsch-Einrichtung wird vorzugsweise für die Beheizung in den anderen Anlageneinheiten verwendet, so dass kein externer Dampf erforderlich wird.

In der Raffinationseinrichtung werden die Produkte der Fischer-Tropsch-Synthese zu synthetischen Kraftstoffen, insbesondere Flugzeugturbinenkraftstoff (Kerosin), Diesel und/oder Rohbenzin, wie beispielsweise Kerosin (SAF-*"Sustainable Aviation Fuef'*)*,* Rohbenzin und/oder Leichtbenzin, veredelt. Für die Herstellung von industriell nutzbaren Kerosin, Diesel und Rohbenzin ist es erforderlich, das paraffinische Produkt der Fischer-Tropsch-Synthese durch Hydro-Isomerisierung und Hydrocracken (Iso-Hydrocracking) derart umzuwandeln, dass ein hochwertiger Flugturbinenkraftstoff mit den erforderlichen Kalteigenschaften (vorzugsweise mit einem Temperaturgrenzwert der Filtrierbarkeit entsprechend "Cold Filter Plugging Point" von maximal -40°C) produziert wird. Die schweren Produkte werden im Iso-Hydrocracker-Reaktor derart rezirkuliert, dass nur noch Kerosin und Rohbenzin als Produkte entstehen. Die dabei entstehenden leichten Gase werden als Brennstoff in den Wärmeerzeugungsabschnitt der Synthesegasherstellungseinrichtung geleitet.

Daher ist es bevorzugt, dass die Raffinationseinrichtung einen oder mehrere Iso-Hydrocracker-Reaktoren vorzugsweise mit einem Edelmetallkatalysator, wie vorzugsweise einem Platin- oder Palladiumkatalysator, umfasst. Besonders bevorzugt sind Edelmetallkatalysatoren, die keine Sulfidierung erfordern, da so eine Verunreinigung der Reaktionsprodukte mit schwefelhaltigen Komponenten vermieden wird, was es wiederum erlaubt, dass das während dem Iso-Hydrocracken erzeugte Prozessgas als auch der erzeugte Wasserdampf in den Wärmeerzeugungsabschnitt der Synthesegasherstellungseinrichtung zurückgeführt werden können. Das Iso-Hydrocracken ist eine katalytische Reaktion, in der insbesondere langkettige paraffinische Kohlenwasserstoffe zu kurzkettigen Isomeren mit verbesserten Kalteigenschaften für die Herstellung von Kerosin herstellt werden. Die katalytische Reaktion erfolgt bevorzugt in Bettreaktoren, die zur Gewährleistung der maximalen Betttemperatur mit Wasserstoff gekühlt werden. Beispielsweise werden diese bei einem Druck von mindestens 70 bar betrieben.

Ferner ist es bevorzugt, dass die Raffinationseinrichtung einen oder mehrere Wasserstoffstripper zum Abtrennen von leichten Kohlenwasserstoffen (nämlich C₁-bis C₄-Kohlenwasserstoffen) umfasst. Schließlich umfasst die Raffinationseinrichtung vorzugsweise eine oder mehrere Destillationssäulen zum Auftrennen der synthetischen Kraftstoffe in einzelne Fraktionen, wie Flugzeugturbinentreibstoff und Diesel, Flugzeugturbinentreibstoff und Rohbenzin, Flugzeugturbinentreibstoff, Rohbenzin und Diesel oder dergleichen.

Der für den Betrieb des Iso-Hydrocracker-Reaktors und für den Wasserstoffstripper benötigte Wasserstoff wird der Raffinationseinrichtung, wie vorstehend beschrieben, bevorzugt aus der Wasserstoffproduktionseinrichtung, welche besonders bevorzugt eine Elektrolyseeinrichtung ist, zugeführt.

Wie vorstehend beschrieben, wird das bei der Fischer-Tropsch-Synthese erzeugte Abwasser, welches hohe Kohlenwasserstoffanteile, wie insbesondere von Alkoholen, Aldehyden, Carbonsäuren etc., mit einem chemischen Sauerstoffbedarf (CSB) von ca. 40.000 mg/l aufweist, bevorzugt der Wasserreinigungseinrichtung zugeführt, um dort so gereinigt zu werden, dass es als Prozesswasser im Kreislauf geführt werden kann.

Gemäß einer ersten erfindungsgemäßen Ausführungsform der vorliegenden Erfindung weist die Anlage eine Trenneinrichtung e₁) zur Abtrennung von Kohlendioxid aus dem über die Abfuhrleitung für Rauchgas aus der Synthesegasherstellungseinrichtung abgeführten Rauchgas aus. Vorzugsweise umfasst die Trenneinrichtung einen Aminwäscher zur Abtrennung von Kohlendioxid aus dem Rauchgas, wobei in dem Aminwäscher Kohlendioxid aus dem Rohsynthesegas durch Absorption mit wenigstens einem Absorptionsmittel, welches bevorzugt aus ein oder mehreren Aminverbindungen besteht, abgetrennt wird. Das so abgetrennte Kohlendioxid kann der Synthesegasherstellungseinrichtung direkt zugeführt werden. Allerdings ist es bevorzugt, dass das so abgetrennte Kohlendioxid aus der Trenneinrichtung - besonders bevorzugt zusammen mit dem in der Trenneinrichtung b) aus dem Rohsynthesegas abgetrennten Kohlendioxid - über eine entsprechende Leitung zunächst einer Kohlendioxidverdichtungseinrichtung zugeführt wird, in welcher das Kohlendioxid auf einen Druck von 25 bis 40 bar und bevorzugt von 30 bis 35 bar verdichtet wird, bevor das so verdichtete Kohlendioxidgas der Synthesegasherstellungseinrichtung zurückgeführt wird.

Gemäß einer zweiten erfindungsgemäßen Ausführungsform der vorliegenden Erfindung wird das in der Synthesegasherstellungseinrichtung erzeugte Rauchgas vollständig - direkt oder indirekt - in die Synthesegasherstellungseinrichtung zurückgeführt. In dieser Ausführungsform weist die Anlage vorzugsweise eine mit der Abfuhrleitung für Rauchgas der Synthesegasherstellungseinrichtung verbundene Rauchgasrückführleitung auf, wobei die Rauchgasrückführleitung - sowie besonders bevorzugt auch die Abfuhrleitung für Kohlendioxid der Trenneinrichtung b) zur Abtrennung von Kohlendioxid aus dem in der Synthesegasherstellungseinrichtung hergestellten Rohsynthesegas - entweder direkt mit einer der wenigstens einen Zufuhrleitung für Kohlendioxid der Synthesegasherstellungseinrichtung verbunden sind oder beide Leitungen zunächst einer Kohlendioxidverdichtungseinrichtung zugeführt werden, in welcher das Kohlendioxid auf den zuvor als bevorzugt beschriebenen Druck verdichtet wird, bevor das so verdichtete Kohlendioxidgas der Synthesegasherstellungseinrichtung zurückgeführt wird.

Gemäß einer dritten erfindungsgemäßen Ausführungsform der vorliegenden Erfindung sind die beiden vorgenannten ersten und zweiten Ausführungsformen kombiniert, d.h. ein Teil des Rauchgases wird in eine Trenneinrichtung zur Abtrennung von Kohlendioxid geführt, in der das Kohlendioxid aus dem Rauchgas abgetrennt wird, wohingegen der Rest des Rauchgases ohne Kohlendioxidabtrennung zusammen mit dem in den beiden Trenneinrichtungen abgetrennten Kohlendioxid direkt in die Synthesegasherstellungseinrichtung zurückgeführt wird oder zunächst einer Kohlendioxidverdichtungseinrichtung zugeführt wird, in welcher das Gasgemisch auf den zuvor als bevorzugt beschriebenen Druck verdichtet wird, bevor das so verdichtete Gasgemisch der Synthesegasherstellungseinrichtung zurückgeführt wird.

Ein weiterer Gegenstand der vorliegenden Patentanmeldung ist ein Verfahren zur Herstellung von synthetischen Kraftstoffen, insbesondere von Flugturbinenkraftstoff (Kerosin), Rohbenzin und/oder Diesel, welches in einer zuvor beschriebenen Anlage durchgeführt wird.

Wie vorstehend dargelegt, kann das erfindungsgemäße Verfahren ohne Abführung von Kohlendioxid bzw. ohne Kohlendioxidemission betrieben werden. Aus diesem Grund ist es bevorzugt, dass bei dem Verfahren kein Kohlendioxid abgeführt wird.

In Weiterbildung des Erfindungsgedankens wird es vorgeschlagen, dass in der Fischer-Tropsch-Einrichtung erzeugtes Gas, in der Raffinationseinrichtung erzeugtes Gas und ein Teil der in der Raffinationseinrichtung synthetischen Kraftstoffe als Brennstoff in den Wärmeerzeugungsabschnitt der Synthesegasherstellungseinrichtung geleitet werden, wobei das Verfahren vorzugsweise so gesteuert wird, dass der Synthesegasherstellungseinrichtung und bevorzugt der gesamten Anlage kein externer Brennstoff zugeführt werden muss bzw. wird.

Vorzugsweise umfasst die Anlage eine Elektrolyseeinrichtung zur Auftrennung von Wasser in Wasserstoff und Sauerstoff, wobei bei dem erfindungsgemäßen Verfahren ein Teil des erzeugten Wasserstoffs der Fischer-Tropsch-Einrichtung, ein Teil des erzeugten Wasserstoffs der Raffinationseinrichtung und vorzugsweise ein Teil vor der Synthesegasverdichtungseinrichtung zur Erzeugung des erforderlichen H₂/CO-Verhältnisses von >2,0 zur Fischer-Tropsch-Syntheseeinrichtung zugeführt werden.

Gemäß einer weiteren besonders bevorzugten Ausführungsform der vorliegenden Erfindung wird ein Teil des in der Elektrolyseeinrichtung erzeugten Wasserstoffs der Synthesegasherstellungseinrichtung zur Entschwefelung des Biomethans zugeführt.

Gute Ergebnisse werden insbesondere erhalten, wenn der Trenneinrichtung b) eine Verdichtungseinrichtung zur Verdichtung des Gases auf den in der Fischer-Tropsch-Synthese erforderlichen Druck nachgeschaltet ist, wobei der Verdichtungseinrichtung ein Teil des in der Elektrolyseeinrichtung erzeugten Wasserstoffs zugeführt wird, wobei die Menge von in die Verdichtungseinrichtung geleiteten Wasserstoffs so gesteuert wird, dass das H₂/CO-Molverhältnis in dem aus der Verdichtungseinrichtung abgeführten und der Fischer-Tropsch-Einrichtung zugeführten Synthesegas mehr als 2,0 beträgt.

Um die benötigte Menge an Verbrennungsluft zu der Synthesegasherstellungseinrichtung so weit wie möglich zu verringern, ist es ferner bevorzugt, dass der Synthesegasherstellungseinrichtung in der Elektrolyseeinrichtung erzeugter Sauerstoff an Stelle der Luft zugeführt wird.

Außerdem ist es bevorzugt, dass die Anlage eine Wasserreinigungseinrichtung umfasst, der von der Raffinationseinrichtung darin erzeugtes Wasser, von der Fischer-Tropsch-Einrichtung darin erzeugtes Wasser und von der Synthesegasherstellungseinrichtung Wasser zugeführt wird, wobei die Menge der in der Wasserreinigungseinrichtung gereinigten Wassers so gesteuert wird, dass diese zumindest ausreicht, um den kompletten Wasserbedarf der Synthesegasherstellungseinrichtung zu decken.

Ferner ist es bevorzugt, dass das Verfahren in einer Anlage durchgeführt wird, welche eine Wasservollentsalzungseinrichtung umfasst, in der Frischwasser so entsalzt und entgast wird, dass das erzeugte Wasser eine für die Elektrolyse von Wasser ausreichend hohe Reinheit aufweist. Vorzugsweise wird bei dem erfindungsgemäßen Verfahren das Wasser in der Entsalzungseinrichtung zu Wasser mit einer Leitfähigkeit von kleiner 20 µS/cm, bevorzugt kleiner 10 µS/cm, besonders bevorzugt kleiner 5 µS/cm und höchst bevorzugt maximal 2 µS/cm gereinigt. In Weiterbildung des Erfindungsgedankens wird vorgeschlagen, dass aus der Fischer-Tropsch-Einrichtung ein Purgegasstrom als Brenngas abgeleitet wird. Dadurch wird die Anreicherung von Inertgasen, wie Stickstoff und Argon, in der Synthesegasherstellungseinrichtung und in der Fischer-Tropsch-Einrichtung zuverlässig verhindert.

Schließlich ist es bevorzugt, dass in der Raffinationseinrichtung Flugturbinenkraftstoff, Rohbenzin und/oder Diesel und bevorzugt sowohl Flugturbinenkraftstoff als auch Rohbenzin hergestellt werden. Beispielsweise werden bei dem erfindungsgemäßen Verfahren Kerosin (SAF-*"Sustainable Aviation Fuel*), Rohbenzin und Leichtbenzin hergestellt.

Nachfolgend wird die vorliegende Erfindung unter Bezug auf die Zeichnung näher beschrieben, in der:

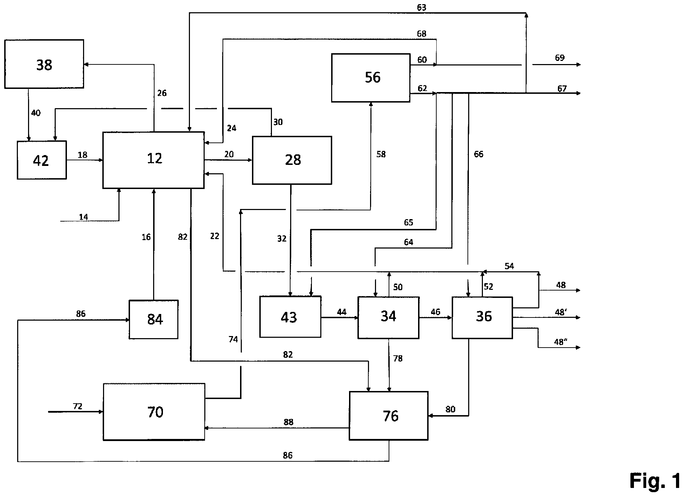

- Fig. 1: eine schematische Ansicht einer zur Herstellung von synthetischen Kraftstoffen zeigt.

Die in der Figur 1 dargestellte Anlage 10 zur Herstellung von synthetischen Kraftstoffen umfasst:
a) eine Synthesegasherstellungseinrichtung 12 zur Herstellung eines Kohlenmonoxid, Wasserstoff und Kohlendioxid umfassenden Rohsynthesegases aus Methan, Wasser und Kohlendioxid, wobei die Synthesegasherstellungseinrichtung 12 mindestens einen Reaktionsabschnitt, in dem Methan, Wasser und Kohlendioxid zu dem Rohsynthesegas reagieren, sowie mindestens einen Wärmeerzeugungsabschnitt aufweist, in dem durch Verbrennen von Brennstoff zu Rauchgas die zur Reaktion von Methan und Kohlendioxid zu dem Rohsynthesegas notwendige Wärme erzeugt wird, wobei der Reaktionsabschnitt eine Zufuhrleitung 14 für Methan, eine Zufuhrleitung 16 für Wasser, wenigstens eine Zufuhrleitung 18 für Kohlendioxid sowie eine Abfuhrleitung 20 für Rohsynthesegas umfasst und der Wärmeerzeugungsabschnitt eine Zufuhrleitung 22 für Brennstoff, eine Zufuhrleitung 24 für Sauerstoff enthaltendes Gas sowie eine Abfuhrleitung 26 für Rauchgas umfasst,
b) eine Trenneinrichtung 28 zur Abtrennung von Kohlendioxid aus dem in der Synthesegasherstellungseinrichtung 12 hergestellten Rohsynthesegas mit einer Abfuhrleitung 30 für Kohlendioxid und einer Abfuhrleitung 32 für Synthesegas,
c) eine Fischer-Tropsch-Einrichtung 34 zur Herstellung von Kohlenwasserstoffen durch ein Fischer-Tropsch-Verfahren aus dem Synthesegas, aus dem in der Trenneinrichtung 28 Kohlendioxid abgetrennt wurde, und
d) eine Raffinationseinrichtung 36 zur Raffination der in der Fischer-Tropsch-Einrichtung 34 hergestellten Kohlenwasserstoffe zu den synthetischen Kraftstoffen,
wobei die Anlage 10 ferner umfasst:
e₁) eine Trenneinrichtung 38 zur Abtrennung von Kohlendioxid aus dem über die Abfuhrleitung 26 für Rauchgas aus der Synthesegasherstellungseinrichtung abgeführten Rauchgas, wobei die Trenneinrichtung 38 eine Abfuhrleitung 40 für Kohlendioxid aufweist, wobei die Abfuhrleitung 40 für Kohlendioxid der Trenneinrichtung 38 zur Abtrennung von Kohlendioxid aus dem über die Abfuhrleitung 26 für Rauchgas aus der Synthesegasherstellungseinrichtung 12 abgeführten Rauchgas sowie die Abfuhrleitung 30 für Kohlendioxid der Trenneinrichtung 28 zur Abtrennung von Kohlendioxid aus dem in der Synthesegasherstellungseinrichtung 12 hergestellten Rohsynthesegas mit einer Kohlendioxidverdichtungseinrichtung 42 verbunden sind, die eine Abfuhrleitung aufweist, die mit der Zufuhrleitung 18 für Kohlendioxid der Synthesegasherstellungseinrichtung 12 verbunden ist.

Der Trenneinrichtung 28 ist eine Synthesegasverdichtungseinrichtung 43 zur Verdichtung des Synthesegases auf den in der Fischer-Tropsch-Synthese erforderlichen Druck nachgeschaltet. Dabei ist die Synthesegasverdichtungseinrichtung 43 mit der Trenneinrichtung 28 über die Abfuhrleitung 32 für Synthesegas und mit der Fischer-Tropsch-Einrichtung 34 über eine Synthesegaszufuhrleitung 44 verbunden. Die Fischer-Tropsch-Einrichtung 34 wiederum ist mit der Raffinationseinrichtung 36 über die Leitung 46 verbunden, wobei die Raffinationseinrichtung 36 drei Produktabfuhrleitungen 48, 48', 48" aufweist.

Von der Fischer-Tropsch-Einrichtung 34 führt eine Gasrückführleitung 50, von der Raffinationseinrichtung 36 führt eine Gasrückführleitung 52 und von der Produktabfuhrleitung 48 führt eine Treibstoffrückführleitung 54 in die Zufuhrleitung 22 für Brennstoff der Synthesegasherstellungseinrichtung 12.

Ferner umfasst die Anlage 10 eine Elektrolyseeinrichtung 56 zur Erzeugung von Wasserstoff und Sauerstoff aus Wasser, wobei die Elektrolyseeinrichtung 56 eine Wasserzufuhrleitung 58, eine Sauerstoffabfuhrleitung 60 und eine Wasserstoffabfuhrleitung 62 aufweist. Dabei führen von der Wasserstoffabfuhrleitung 62 eine Leitung 63 zu der Synthesegasherstellungseinrichtung 12, eine Leitung 64 zu der Fischer-Tropsch-Einrichtung 34, eine Leitung 65 zu der Kohlendioxidverdichtungseinrichtung 42 und eine Leitung 66 zu der Raffinationseinrichtung 36. Von der Sauerstoffabfuhrleitung 60 führt eine Sauerstoffleitung 68 in die Zufuhrleitung 24 für Sauerstoff enthaltendes Gas der Synthesegasherstellungseinrichtung 12.

Außerdem umfasst die Anlage 10 eine Wasservollentsalzungseinrichtung 70, welche eine Frischwasserzufuhrleitung 72 und eine Abfuhrleitung 74 für vollentsalztes Wasser aufweist, wobei die Abfuhrleitung 74 für vollentsalztes Wasser mit der Wasserzufuhrleitung 58 der Elektrolyseeinrichtung 56 verbunden ist.

Schließlich umfasst die Anlage 10 eine Wasserreinigungseinrichtung 76, in welcher in der Anlage anfallendes Prozesswasser so aufgereinigt wird, dass es im Kreislauf geführt werden kann. Zu der Wasserreinigungseinrichtung 76 führen eine von der Fischer-Tropsch-Einrichtung 34 kommende Prozesswasserzufuhrleitung 78, eine von der Raffinationseinrichtung 36 kommende Prozesswasserzufuhrleitung 80 sowie eine von der Synthesegasherstellungseinrichtung 12 kommende Prozesswasserzufuhrleitung 82. Ferner umfasst die Anlage 10 eine Verdampfungseinrichtung 84, wobei die Verdampfungseinrichtung 84 mit der Wasserreinigungseinrichtung 76 über eine Prozesswasserleitung 86 verbunden ist. Zudem ist die Verdampfungseinrichtung 84 über eine Leitung mit der Zufuhrleitung 16 für Wasser der Synthesegasherstellungseinrichtung 12 verbunden. Schließlich führt von der Wasserreinigungseinrichtung 76 eine Prozesswasserleitung 88 zu der Wasservollentsalzungseinrichtung 70.

Bei dem Betrieb der Anlage 10 wird dem Reaktionsabschnitt der Synthesegasherstellungseinrichtung 12 über die Zufuhrleitung 14 Methan, über die Zufuhrleitung 16 Wasser(dampf) sowie über die Zufuhrleitung 18 Kohlendioxid zugeführt, welche in dem Reaktionsabschnitt der Synthesegasherstellungseinrichtung 12 zu Rohsynthesegas reagieren. Die für diese sehr stark endotherme Reaktion notwendige Energie bzw. Wärme wird durch Verbrennen von Brennstoff in dem Wärmeerzeugungsabschnitt der Synthesegasherstellungseinrichtung erzeugt. Hierzu wird dem Wärmeerzeugungsabschnitt der Synthesegasherstellungseinrichtung 12 über die Zufuhrleitung 22 Brennstoff sowie über die Zufuhrleitung 24 Sauerstoff zugeführt. Der Brennstoff stammt aus in der Anlage 10 produzierten Abgasen bzw. Treibstoff, nämlich aus dem Abgas der Fischer-Tropsch-Einrichtung 34, welches der Synthesegasherstellungseinrichtung 12 über die Gasrückführleitung 50 zugeführt wird, aus dem Abgas der Raffinationseinrichtung 36, welches der Synthesegasherstellungseinrichtung 12 über die Gasrückführleitung 52 zugeführt wird, und aus synthetischem Treibstoff (Leichtbenzin), von dem ein Teil der Synthesegasherstellungseinrichtung 12 über die Produktabfuhrleitung 48 zugeführt wird. Die Verbrennung des Brennstoffs in dem Wärmeerzeugungsabschnitt der Synthesegasherstellungseinrichtung 12 erfolgt beispielsweise bei 1,5 bar und einer Temperatur von 1.100°C. Das in dem Reaktionsabschnitt der Synthesegasherstellungseinrichtung 12 erzeugte Rohsynthesegas wird über die Abfuhrleitung 20 abgezogen und der Trenneinrichtung 28 zugeführt, wohingegen das in dem Wärmeerzeugungsabschnitt der Synthesegasherstellungseinrichtung 12 durch Verbrennen erzeugte Rauchgas über die Abfuhrleitung 26 abgezogen und der Trenneinrichtung 38 zugeführt wird. In der Trenneinrichtung 28 wird aus dem Rohsynthesegas Kohlendioxid abgetrennt, welches über die Leitung 30 in die Kohlendioxidverdichtungseinrichtung 42 geleitet wird. Zudem wird in der Trenneinrichtung 38 aus dem Rauchgas Kohlendioxid abgetrennt, welches über die Leitung 40 in die Kohlendioxidverdichtungseinrichtung geleitet wird. In der Kohlendioxidverdichtungseinrichtung 42 wird das Kohlendioxid auf beispielsweise auf 32,5 bar verdichtet, bevor das verdichtete Kohlendioxid der Synthesegasherstellungseinrichtung 12 über die Leitung 18 wieder zugeführt wird. Durch diese Verfahrensführung kann auf eine Kohlendioxidemission verzichtet werden, da das durch die Verbrennung des Brennstoffs entstehende Kohlendioxid eingesetzt wird, um das bei der Synthesegasherstellung verbrauchte Kohlendioxid zu ersetzen. Aus diesem Grund läuft das erfindungsgemäße Verfahren kohlendioxidneutral ab. Zudem kann durch diese Verfahrensführung auf eine Zufuhr von Brennstoff von außen vollständig oder zumindest nahezu vollständig verzichtet werden.

Das in der Trenneinrichtung 28 von Kohlendioxid befreite Synthesegas wird über die Leitung 32 der Synthesegasverdichtungseinrichtung 43 zugeführt, in welcher zudem von der Elektrolyseeinrichtung 56 über die Leitung 65 Wasserstoff zugeführt wird. In der Verdichtungseinrichtung wird das Synthesegas beispielsweise auf 42,5 bar verdichtet, sowie auf eine Temperatur von 120°C eingestellt. Ferner erfolgt nach der Verdichtungseinrichtung auch eine Reinigung des Synthesegases mit entsprechenden Adsorbentien, durch welche aus dem Synthesegas Halogene, Schwefel, Stickstoff, Sauerstoff, Metalle und andere Verunreinigungen abgetrennt werden. Die Menge an der Synthesegasverdichtungseinrichtung 43 zugeführten Wasserstoff wird so gesteuert, dass das H₂/CO-Molverhältnis des Synthesegases mehr als 2,0 beträgt. Dieses Synthesegas wird über die Leitung 44 in die Fischer-Tropsch-Einrichtung 34 geführt, in der das Synthesegas zu vornehmlich normalparaffinischen Kohlenwasserstoffen umgesetzt wird. Diese Kohlenwasserstoffe werden über die Leitung 46 in die Raffinationseinrichtung 36 geleitet, in der diese durch Hydro-Isomerisierung und Hydrocracken (Iso-Hydrocracking) zu synthetischen Rohkraftstoffen umgesetzt werden, die dann in dem Wasserstoffstripper getrennt werden und in den ein oder mehreren Destillationssäulen der Raffinationseinrichtung 36 in die Fraktionen Leichtbenzin, Rohbenzin und Kerosin (SAF-*"Sustainable Aviation Fuel"*) aufgetrennt werden, welche über die Leitungen 48 (Leichtbenzin), 48' (Benzin) und 48" (Kerosin) aus der Anlage 10 abgeführt werden, allerdings mit Ausnahme des Teils des Leichtbenzins, welcher über die Treibstoffrückführleitung 54 und die Brennstoffzufuhrleitung 22 der Synthesegasherstellungseinrichtung 12 zugeführt wird. In der Fischer-Tropsch-Einrichtung 34, in der Raffinationseinheit 36 und in der Synthesegasherstellungseinrichtung 12 anfallendes Wasser wird über die Prozesswasserleitungen 78, 80, 82 in die Abwasserreinigungseinrichtung 76 geleitet, in der das Abwasser durch Dampfstripping gereinigt wird. Das vorgereinigte Prozesswasser wird über die Prozesswasserleitung 86 der Verdampfungseinrichtung zugeführt, in der das Prozesswasser vollständig verdampft wird, wobei der so erzeugte Wasserdampf über die Leitung 16 der Synthesegasherstellungseinrichtung 12 zugeführt wird.

Das für die Elektrolyseeinrichtung 56 benötige reine Wasser wird durch Vollentsalzung von Frischwasser in der Wasservollentsalzungseinrichtung 70 erzeugt und der Elektrolyseeinrichtung 56 über die Leitung 58 zugeführt. Der in der Elektrolyseeinrichtung 56 erzeugte Wasserstoff wird über die Leitungen 62, 63, 64, 65 der Synthesegasherstellungseinrichtung 12, der Fischer-Tropsch-Einrichtung 34, der Synthesegasverdichtungseinrichtung 43 und der Raffinationseinrichtung 36 zugeführt. Der in der Elektrolyseeinrichtung 56 erzeugte Sauerstoff wird wahlweise als sauerstoffhaltiges Gas über die Leitung 68 in den Wärmeerzeugungsabschnitt der Synthesegasherstellungseinrichtung 12 geleitet.

Nachfolgend wird die vorliegende Erfindung anhand eines illustrativ, aber die Erfindung nicht einschränkenden Beispiels beschrieben.

### Beispiel

Es wurde das erfindungsgemäße Verfahren in einer in der Figur 1 gezeigten und vorstehend beschriebenen Anlage mit der Prozesssimulationssoftware PRO/II (AVEVA) zur Herstellung von 157.000 Litern pro Tag Kerosin (SAF-"*Sustainable Aviation Fuel"*) und 46.000 Litern pro Tag Rohbenzin (Naphtha) simuliert. Dabei wurden für die einzelnen Leitungen folgende Produktströme ermittelt:

| | | **Gesamt** | **Gas** | **Flüssig** |
|---|---|---|---|---|
| **Nr.** | **Bezeichnung** | **kg/h** | **Nm³/h** | **Std.m³/h** |
| 14 | Zufuhrleitung für Methan zu der Synthesegasherstellungseinrichtung | 6.150 | 8.592 | |
| 16 | Zufuhrleitung für Wasser zu der Synthesegasherstellungseinrichtung | 11.000 | | 11,1 |
| 18 | Zufuhrleitung für Kohlendioxid zu der Synthesegasherstellungseinrichtung | 26.127 | 13.321 | |
| 20 | Abfuhrleitung für Rohsynthesegas | 33.782 | 39.955 | |
| 22 | Zufuhrleitung für Brennstoff | 5.737 | 5.335 | 0,528 |
| 24 | Zufuhrleitung für Sauerstoff enthaltendes Gas (O₂) | 70.474 (16.173) | 54.837 (1.132) | |
| 26 | Abfuhrleitung für Rauchgas | 76.238 | 60.793 | |
| 30 | Abfuhrleitung für Kohlendioxid aus der Rohsynthesegastrenneinrichtung | 13.760 | 6.986 | |
| 32 | Abfuhrleitung für Synthesegas | 20.022 | 32.875 | |
| 40 | Abfuhrleitung für Kohlendioxid aus der Rauchqastrenneinrichtunq | 12.639 | 6.563 | |
| 44 | Synthesegaszufuhrleitung zu Fischer-Tropsch-Einrichtunq | 21.091 | 44.295 | |
| 46 | Zufuhrleitung zu der Raffinationseinrichtung | 6.768 | | 9,67 |
| 48 | Produktabfuhrleitung Leichtbenzin (leichtes Naphtha) | 0 | | 0 |
| 48' | Produktabfuhrleitung Rohbenzin (Naphtha) | 219 | | 0,322 |
| 48" | Produktabfuhrleitung Kerosin | 4.958 | | 6,79 |
| 50 | Gasrückführleitung der Fischer-Tropsch-Einrichtunq | 3.636 | 4.492 | |
| 52 | Gasrückführleitung der Raffinationseinrichtung | 437 | 196 | 0,04 |
| 54 | Treibstoffrückführleitung | 1.458 | | 2,144 |
| 58 | Wasserzufuhrleitung der Elektrolyseeinrichtung | 11.670 | | 11,7 |
| 60 | Sauerstoffabfuhrleitung der Elektrolyseeinrichtung | 10.321 | 7.225 | |
| 62 | Wasserstoffabfuhrleitung der Elektrolyseeinrichtung | 1.359 | 15.221 | |
| 63 | Wasserstoffzufuhrleitung zu Synthesegasherstellungseinrichtung | 17,7 | 198 | |
| 64 | Wasserstoffzufuhrleitung zu Fischer-Tropsch-Einrichtung | 0 | 0 | |
| 65 | Wasserstoffzufuhrleitung zu Kohlendioxidverdichtungseinrichtung | 1.069 | 11.973 | |
| 66 | Wasserstoffzufuhrleitung zu Raffinationseinrichtung | 93 | 1.042 | |
| 67 | Wasserstoffproduktleitung | 171 | 1.915 | |
| 68 | Sauerstoffleitung | 10.321 | 715 | |
| 69 | Sauerstoffproduktleitung | (10.321) | (715) | |
| 72 | Frischwasserzufuhrleitung | 4.487 | | 4,5 |
| 74 | Abfuhrleitung für entsalztes Wasser | 11.670 | | 11,7 |
| 78 | Prozesswasserabfuhrleitung von der Fischer-Tropsch-Einrichtunq | 10.556 | | 10,6 |
| 80 | Prozesswasserabfuhrleitung von der Raffinationseinrichtung | 114 | | 0,115 |
| 82 | Prozesswasserabfuhrleitung von der Synthesegasherstellungseinrichtung | 9.512 | | 9,55 |
| 86 | Prozesswasserzufuhrleitung der Verdampfungseinrichtung von der Wasserreinigungseinrichtung | 11.000 | | 11,1 |
| 88 | Prozesswasserzufuhrleitung der Wasserentsalzungseinrichtung von der Wasserreinigungseinrichtung | 9.182 | | 9,2 |

### Bezugszeichenliste

- 10: Anlage zur Herstellung von synthetischen Kraftstoffen
- 12: Synthesegasherstellungseinrichtung/Trockenreformer
- 14: Zufuhrleitung für Methan zu der Synthesegasherstellungseinrichtung
- 16: Zufuhrleitung für Wasser zu der Synthesegasherstellungseinrichtung
- 18: Zufuhrleitung für Kohlendioxid zu der Synthesegasherstellungseinrichtung
- 20: Abfuhrleitung für Rohsynthesegas
- 22: Zufuhrleitung für Brennstoff
- 24: Zufuhrleitung für Sauerstoff enthaltendes Gas
- 26: Abfuhrleitung für Rauchgas
- 28: Trenneinrichtung zur Abtrennung von Kohlendioxid aus Rohsynthesegas
- 30: Abfuhrleitung für Kohlendioxid aus der Rohsynthesegastrenneinrichtung
- 32: Abfuhrleitung für Synthesegas
- 34: Fischer-Tropsch-Einrichtung
- 36: Raffinationseinrichtung
- 38: Trenneinrichtung zur Abtrennung von Kohlendioxid aus Rauchgas
- 40: Abfuhrleitung für Kohlendioxid aus der Rauchgastrenneinrichtung
- 42: Kohlendioxidverdichtungseinrichtung
- 43: Synthesegasverdichtungseinrichtung
- 44: Synthesegaszufuhrleitung zu Fischer-Tropsch-Einrichtung
- 46: Zufuhrleitung zu der Raffinationseinrichtung
- 48, 48', 48": Produktabfuhrleitungen
- 50: Gasrückführleitung der Fischer-Tropsch-Einrichtung
- 52: Gasrückführleitung der Raffinationseinrichtung
- 54: Treibstoffrückführleitung
- 56: Elektrolyseeinrichtung
- 58: Wasserzufuhrleitung der Elektrolyseeinrichtung
- 60: Sauerstoffabfuhrleitung der Elektrolyseeinrichtung
- 62: Wasserstoffabfuhrleitung der Elektrolyseeinrichtung
- 63: Wasserstoffzufuhrleitung zu Synthesegasherstellungseinrichtung
- 64: Wasserstoffzufuhrleitung zu Fischer-Tropsch-Einrichtung
- 65: Wasserstoffzufuhrleitung zu Kohlendioxidverdichtungseinrichtung
- 66: Wasserstoffzufuhrleitung zu Raffinationseinrichtung
- 67: Wasserstoffproduktleitung
- 68: Sauerstoffleitung
- 69: Sauerstoffproduktleitung
- 70: Wasserentsalzungseinrichtung
- 72: Frischwasserzufuhrleitung
- 74: Abfuhrleitung für entsalztes Wasser
- 76: Wasserreinigungseinrichtung
- 78: Prozesswasserabfuhrleitung von der Fischer-Tropsch-Einrichtung
- 80: Prozesswasserabfuhrleitung von der Raffinationseinrichtung
- 82: Prozesswasserabfuhrleitung von der Synthesegasherstellungseinrichtung
- 84: Verdampfungseinrichtung
- 86: Prozesswasserzufuhrleitung der Verdampfungseinrichtung von der Wasserreinigungseinrichtung
- 88: Prozesswasserzufuhrleitung der Wasserentsalzungseinrichtung von der Wasserreinigungseinrichtung

## Patentansprüche

1. Anlage (10) zur Herstellung von synthetischen Kraftstoffen, insbesondere von Flugturbinenkraftstoff (Kerosin), Rohbenzin und/oder Diesel, umfassend:
a) eine Synthesegasherstellungseinrichtung (12) zur Herstellung eines Kohlenmonoxid, Wasserstoff und Kohlendioxid umfassenden Rohsynthesegases aus Methan, Wasser und Kohlendioxid, wobei die Synthesegasherstellungseinrichtung (12) mindestens einen Reaktionsabschnitt, in dem Methan, Wasser und Kohlendioxid zu dem Rohsynthesegas reagieren, sowie mindestens einen Wärmeerzeugungsabschnitt aufweist, in dem durch Verbrennen von Brennstoff zu Rauchgas die zur Reaktion von Methan und Kohlendioxid zu dem Rohsynthesegas notwendige Wärme erzeugt wird, wobei der Reaktionsabschnitt eine Zufuhrleitung (14) für Methan, eine Zufuhrleitung (16) für Wasser, wenigstens eine Zufuhrleitung (18) für Kohlendioxid sowie eine Abfuhrleitung (20) für Rohsynthesegas umfasst und der Wärmeerzeugungsabschnitt eine Zufuhrleitung (22) für Brennstoff, eine Zufuhrleitung für Sauerstoff enthaltendes Gas (24) sowie eine Abfuhrleitung (26) für Rauchgas umfasst,
b) eine Trenneinrichtung (28) zur Abtrennung von Kohlendioxid aus dem in der Synthesegasherstellungseinrichtung (12) hergestellten Rohsynthesegas mit einer Abfuhrleitung (30) für Kohlendioxid und einer Abfuhrleitung (32) für Synthesegas,
c) eine Fischer-Tropsch-Einrichtung (34) zur Herstellung von Kohlenwasserstoffen durch ein Fischer-Tropsch-Verfahren aus dem Synthesegas, aus dem in der Trenneinrichtung (28) Kohlendioxid abgetrennt wurde, und
d) eine Raffinationseinrichtung (36) zur Raffination der in der Fischer-Tropsch-Einrichtung (34) hergestellten Kohlenwasserstoffe zu den synthetischen Kraftstoffen,
wobei die Anlage (10) ferner umfasst:
e₁) eine Trenneinrichtung (38) zur Abtrennung von Kohlendioxid aus dem über die Abfuhrleitung (26) für Rauchgas aus dem Wärmeerzeugungsabschnitt der Synthesegasherstellungseinrichtung (12) abgeführten Rauchgas, wobei die Trenneinrichtung (28) eine Abfuhrleitung (40) für Kohlendioxid aufweist, wobei die Abfuhrleitung (40) für Kohlendioxid der Trenneinrichtung (38) sowie die Abfuhrleitung (30) für Kohlendioxid der Trenneinrichtung (28) entweder direkt mit einer der wenigstens einen Zufuhrleitung (18) für Kohlendioxid der Synthesegasherstellungseinrichtung (12) verbunden sind oder die Abfuhrleitung (40) für Kohlendioxid der Trenneinrichtung (38) sowie die Abfuhrleitung (30) für Kohlendioxid der Trenneinrichtung (28) mit einer Kohlendioxidverdichtungseinrichtung (42) verbunden sind, die eine Abfuhrleitung aufweist, die mit einer der wenigstens einen Zufuhrleitung (18) für Kohlendioxid der Synthesegasherstellungseinrichtung (12) verbunden ist,
und/oder
e₂) eine mit der Abfuhrleitung (26) für Rauchgas der Synthesegasherstellungseinrichtung (12) verbundene Rauchgasrückführleitung, wobei die Rauchgasrückführleitung sowie die Abfuhrleitung (30) für Kohlendioxid der Trenneinrichtung (28) entweder direkt mit einer der wenigstens einen Zufuhrleitung (18) für Kohlendioxid der Synthesegasherstellungseinrichtung (12) verbunden sind oder die Rauchgasrückführleitung sowie die Abfuhrleitung (30) für Kohlendioxid der Trenneinrichtung (28) mit einer Kohlendioxidverdichtungseinrichtung (42) verbunden sind, die eine Abfuhrleitung aufweist, die mit einer der wenigstens einen Zufuhrleitung (18) für Kohlendioxid der Synthesegasherstellungseinrichtung (12) verbunden ist.

2. Anlage (10) nach Anspruch 1, **dadurch gekennzeichnet, dass** diese keine Kohlendioxidabfuhrleitung aufweist.

3. Anlage (10) nach Anspruch 1 oder 2, **dadurch gekennzeichnet, dass** die Fischer-Tropsch-Einrichtung (34) und/oder die Raffinationseinrichtung (36) eine Gasabfuhrleitung (50, 52) aufweisen, welche mit der Zufuhrleitung (22) für Brennstoff der Synthesegasherstellungseinrichtung (12) verbunden ist/sind.

4. Anlage (10) nach zumindest einem der vorhergehenden Ansprüche, **dadurch gekennzeichnet, dass** die Raffinationseinrichtung (36) ein oder mehrere Produktabfuhrleitungen (48, 48', 48") für synthetische Kraftstoffe aufweist, wobei wenigstens eine der ein oder mehreren Produktabfuhrleitungen (48, 48', 48") für synthetische Kraftstoffe über eine Rückführleitung (54) mit der Zufuhrleitung (22) für Brennstoff der Synthesegasherstellungseinrichtung (12) verbunden ist, so dass ein Teil der in der Raffinationseinrichtung (36) erzeugten synthetischen Kraftstoffe als Brennstoff in den Wärmeerzeugungsabschnitt der Synthesegasherstellungseinrichtung (12) geleitet werden kann.

5. Anlage (10) nach Anspruch 4, **dadurch gekennzeichnet, dass** diese eine Steuereinrichtung umfasst, welche die Menge von in den Wärmeerzeugungsabschnitt der Synthesegasherstellungseinrichtung (12) als Brennstoff geleiteten synthetischen Kraftstoff so steuert, dass der Synthesegasherstellungseinrichtung (12) und bevorzugt der gesamten Anlage (10) kein externer Brennstoff zugeführt werden muss.

6. Anlage (10) nach zumindest einem der vorhergehenden Ansprüche, **dadurch gekennzeichnet, dass** diese ferner eine Elektrolyseeinrichtung (56) zur Auftrennung von Wasser in Wasserstoff und Sauerstoff umfasst, wobei die Elektrolyseeinrichtung (56) eine Wasserzufuhrleitung (58), eine Sauerstoffabfuhrleitung (60) und eine Wasserstoffabfuhrleitung (62) aufweist, wobei von der Wasserstoffabfuhrleitung (62) eine Leitung (64) zu der Fischer-Tropsch-Einrichtung (34), von der Wasserstoffabfuhrleitung (62) eine Leitung (66) zu der Raffinationseinrichtung (36) und von der Wasserstoffabfuhrleitung (62) eine Leitung (65) zur Synthesegasverdichtungseinrichtung (43) führt und von der Sauerstoffabfuhrleitung (60) eine Leitung (68) in die Zufuhrleitung für Sauerstoff enthaltenes Gas (24) zur Synthesegasherstellungseinrichtung (12) führt, wobei vorzugsweise die Synthesegasherstellungseinrichtung (12) auch eine Wasserstoffzufuhrleitung (63) umfasst, welche von der Wasserstoffabfuhrleitung (62) der Elektrolyseeinrichtung zur Synthesegasherstellungseinrichtung (12) führt.

7. Anlage (10) nach Anspruch 6, **dadurch gekennzeichnet, dass** diese eine Wasservollentsalzungseinrichtung (70) umfasst, welche eine Frischwasserzufuhrleitung (72) und eine Abfuhrleitung (74) für entsalztes Wasser aufweist, wobei die Abfuhrleitung (74) für entsalztes Wasser mit der Wasserzufuhrleitung der Elektrolyseeinrichtung (56) verbunden ist, wobei vorzugsweise die Wasserentsalzungseinrichtung (70) einen oder mehrere Anionen-und Kationenaustauscher sowie eine Membraneinrichtung zur Entgasung umfasst, welche derart ausgelegt sind, dass Wasser soweit entsalzt und entgast werden kann, dass dessen Leitfähigkeit bei kleiner 20 µS/cm, bevorzugt kleiner 10 µS/cm, besonders bevorzugt kleiner 5 µS/cm und höchst bevorzugt maximal 2 µS/cm liegt.

8. Anlage (10) nach zumindest einem der vorhergehenden Ansprüche, **dadurch gekennzeichnet, dass** diese eine Wasserreinigungseinrichtung (76) umfasst, welche eine von der Raffinationseinrichtung (36) zu der Wasserreinigungseinrichtung (76) führende Wasserzufuhrleitung (80) und/oder eine von der Fischer-Tropsch-Einrichtung (34) zu der Wasserreinigungseinrichtung (76) führende Wasserzufuhrleitung (78) und/oder eine von der Synthesegasherstellungseinrichtung (12) zu der Wasserreinigungseinrichtung (76) führende Wasserzufuhrleitung (82) jeweils zur Reinigung von darin anfallendem Wasser umfasst, wobei vorzugsweise die Wasserreinigungseinrichtung (76) über eine Leitung (88) mit der Wasservollentsalzungseinrichtung (70) verbunden ist, so dass in der Wasserreinigungseinrichtung (76) gereinigtes Wasser in die Wasservollentsalzungseinrichtung (70) geleitet werden kann.

9. Anlage (10) nach zumindest einem der vorhergehenden Ansprüche, **dadurch gekennzeichnet, dass** der Trenneinrichtung (28) eine Synthesegasverdichtungseinrichtung (43) zur Verdichtung des Gases auf den in der Fischer-Tropsch-Synthese erforderlichen Druck nachgeschaltet ist, wobei die Synthesegasverdichtungseinrichtung (43) mit der Trenneinrichtung (28) über eine Leitung (32) und mit der Fischer-Tropsch-Einrichtung (34) über eine Synthesegaszufuhrleitung (44) verbunden ist, wobei vorzugsweise die Synthesegasverdichtungseinrichtung (43) eine Wasserstoffzufuhrleitung (65) aufweist, welche mit der Elektrolyseeinrichtung (56) verbunden ist.

10. Anlage (10) nach zumindest einem der vorhergehenden Ansprüche, **dadurch gekennzeichnet, dass** die Raffinationseinrichtung (36) einen oder mehrere Iso-Hydrocracker-Reaktoren, einen Wasserstoffstripper und eine oder mehrere Destillationssäulen umfasst.

11. Verfahren zur Herstellung von synthetischen Kraftstoffen, insbesondere von Flugturbinenkraftstoff (Kerosin), Rohbenzin und/oder Diesel, welches in einer Anlage (10) nach zumindest einem der vorhergehenden Ansprüche durchgeführt wird.

12. Verfahren nach Anspruch 11, **dadurch gekennzeichnet, dass** bei dem Verfahren kein Kohlendioxid abgeführt wird.

13. Verfahren nach Anspruch 11 oder 12, **dadurch gekennzeichnet, dass** in der Fischer-Tropsch-Einrichtung (34) erzeugtes Gas, in der Raffinationseinrichtung (36) erzeugtes Gas und ein Teil der in der Raffinationseinrichtung synthetischen Kraftstoffe als Brennstoff in den Wärmeerzeugungsabschnitt der Synthesegasherstellungseinrichtung (12) geleitet werden, wobei das Verfahren so gesteuert wird, dass der Synthesegasherstellungseinrichtung (12) und bevorzugt der gesamten Anlage (10) kein externer Brennstoff zugeführt werden muss.

14. Verfahren nach zumindest einem der Ansprüche 11 bis 13, **dadurch gekennzeichnet, dass** die Anlage (10) eine Elektrolyseeinrichtung (56) zur Auftrennung von Wasser in Wasserstoff und Sauerstoff umfasst, wobei ein Teil des erzeugten Wasserstoffs der Fischer-Tropsch-Einrichtung (34) sowie ein Teil des erzeugten Wasserstoffs der Raffinationseinrichtung (36) zugeführt wird, wobei vorzugsweise ein Teil des in der Elektrolyseeinrichtung (56) erzeugten Wasserstoffes der Synthesegasherstellungseinrichtung (12) zugeführt wird, wobei das H₂/CO-Molverhältnis in dem in der Synthesegasherstellungseinrichtung (12) erzeugten Rohsynthesegas so gesteuert wird, dass es 1,15 bis 1,80 beträgt.

15. Verfahren nach Anspruch 14, **dadurch gekennzeichnet, dass** der Trenneinrichtung (28) eine Synthesegasverdichtungseinrichtung (43) zur Verdichtung des Gases auf den in der Fischer-Tropsch-Synthese erforderlichen Druck nachgeschaltet ist, wobei der Synthesegasverdichtungseinrichtung (43) ein Teil des in der Elektrolyseeinrichtung (56) erzeugten Wasserstoffs zugeführt wird, wobei die Menge von in die Synthesegasverdichtungseinrichtung (43) geleiteten Wasserstoff so gesteuert wird, dass das H₂/CO-Molverhältnis in dem aus der Synthesegasverdichtungseinrichtung (43) abgeführten und der Fischer-Tropsch-Einrichtung (34) zugeführten Synthesegas mehr als 2,0 beträgt.
